(19) Europäisches Patentamt
European Patent Office
Office européen des brevets

(11) EP 3 442 070 A1

(12) EUROPEAN PATENT APPLICATION

(43) Date of publication:
**13.02.2019 Bulletin 2019/07**

(51) Int Cl.:
***H01M 10/0565*** *(2010.01)*

(21) Application number: **17001373.4**

(22) Date of filing: **10.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Baden-Württemberg Stiftung gGmbH**
**70174 Stuttgart (DE)**

(72) Inventors:
- **Wolf, Jürgen Daniel**
  **79249 Merzhausen (DE)**
- **Mülhaupt, Rolf**
  **79117 Freiburg (DE)**

(74) Representative: **Müller-Boré & Partner**
**Patentanwälte PartG mbB**
**Friedenheimer Brücke 21**
**80639 München (DE)**

(54) **POLYHYDROXYURETHANE-BASED GEL POLYMER ELECTROLYTES FOR ENERGY STORAGE SYSTEMS**

(57) The present invention relates to a gel polymer electrolyte, comprising a polyhydroxyurethane matrix, obtained by reacting a polyfunctional cyclic carbonate and a diamine, and an alkali metal salt dissolved in an aprotic polar solvent, wherein the polyhydroxyurethane matrix is gelled with the aprotic polar solvent and the alkali metal salt dissolved therein, as well as to the use of said gel polymer electrolyte as a separation medium for an energy storage system.

EP 3 442 070 A1

## Description

The present invention relates to a gel polymer electrolyte as well as to the use of said gel polymer electrolyte as a separation medium for an energy storage system.

Gel polymer electrolytes (GPEs) are nowadays used in a variety of energy storage systems, including chargeable and non-chargeable batteries, capacitors, fuel cells, and dye-sensitized solar cells. Therein, gel polymer electrolytes *inter alia* function as a separator medium between the active materials of the cathode and the anode, and permit the transport of ions for ensuring charge equalization. A review about gel polymer electrolytes can be taken from K. S. Ngai et al., Ionics 2016, 22, 1259-1279.

Basically, GPEs comprise a linear or crosslinked polymer matrix which is gelled with an electrolyte solution. Typically, the polar solvent of the electrolyte solution is aprotic, and allows for the dissolution of the electrolyte which usually comprises inert anions, such as tetrafluoroborate or hexafluorophosphate. Gel polymer electrolytes have advantageous properties when compared to conventional, i.e. fluid electrolytes, since a leakage of the solvent can be avoided. In addition, the vapor pressure of the solvent which is absorbed in the gelled polymer matrix is reduced due to the interaction with the latter. Thereby, bursting of a GPE-based energy storage system can be prevented in case of exposure to elevated temperatures.

Typically, the gel polymer electrolytes known in the art are obtained using highly fluorinated polymers, such as polyvinylidene difluoride (PVdF). However, GPEs based on highly fluorinated polymers have drawbacks in several aspects. First of all, fluorine is a corrosive and toxic gas which requires elaborated safety standards in the manufacture of the polymer matrix, and thus, leads to increased costs associated with the final energy storage system. Furthermore, in case such an energy storage system catches fire, the polymer matrix of the gel polymer electrolyte may decompose, resulting in a release of highly toxic hydrogen fluoride. Last but not least, the ionic conductivity of gel polymer electrolytes based on highly fluorinated polymers is in many cases significantly less than that of the underlying fluid electrolyte.

Therefore, there is still a need for novel classes of gel polymer electrolytes which overcome the aforementioned drawbacks of highly fluorinated GPEs known in the art.

In view of the above, the technical problem underlying the present invention is to provide a gel polymer electrolyte which shall be obtainable from less toxic starting materials, i.e. be free of fluorine, and which shall have a high ionic conductivity.

The above technical problem is solved by the embodiments characterized in the claims.

In a first aspect, the present invention relates to a gel polymer electrolyte comprising a polyhydroxyurethane matrix, obtained by crosslinking a polyfunctional cyclic carbonate with a diamine, and an alkali metal salt dissolved in an aprotic polar solvent, wherein the polyhydroxyurethane matrix is gelled with the aprotic polar solvent and the alkali metal salt dissolved therein.

Gel polymer electrolytes based on a polyhydroxyurethane matrix exhibit high ionic conductivities which compete with or even exceed the ionic conductivities of GPEs reported in the art. In particular, the gel polymer electrolyte according to the present invention is free of fluorine, and can be obtained from bio-based starting materials, i.e. the starting materials, or the derivatives or precursors thereof, can be obtained from biological/renewable (re)sources, such as carbohydrates and proteins.

As mentioned above, the gel polymer electrolyte according to the present invention comprises a polyhydroxyurethane matrix, obtained by crosslinking a polyfunctional cyclic carbonate with a diamine. Herein, the term "polyfunctional" means that the cyclic carbonate has at least three cyclic carbonate groups so that it can be crosslinked with a diamine. In the course of reacting with the diamine, the cyclic carbonate groups of the polyfunctional cyclic carbonate open due to the nucleophilic attack of the amino group at the carbonyl carbon atom, thereby leading to the formation of a urethane group with a hydroxy group in its vicinity. Accordingly, the obtained polymer matrix is a polyhydroxyurethane (PHU) matrix. Due to its crosslinked structure, the polyhydroxyurethane matrix has a sufficient dimensional stability. This is particularly important when using the gel polymer electrolyte comprising said polyhydroxyurethane matrix as a separation medium for an energy storage system.

Principally, the upper limit of cyclic carbonate groups is not particularly limited according to the present invention. However, from the viewpoint of crosslink density, it is preferable that the upper limit of the cyclic carbonate groups is at most six. In case the polymer matrix is too densely crosslinked, the electrolyte uptake, i.e. the amount of absorbed electrolyte solution, may decrease. Generally, the electrolyte uptake reflects the extent of gelling, and is represented by the following formula (a):

$$\text{(a)} \quad \text{electrolyte uptake} = \frac{m_{\text{gel polymer electrolyte}} - m_{\text{polyhydroxyurethane matrix}}}{m_{\text{polyhydroxyurethane matrix}}} \times 100 \text{ mass\%}.$$

In the above formula (a), $m_{gel}$ polymer electrolyte represents the mass of the gel polymer electrolyte as finally obtained, i.e. after gelling has been completed, and $m_{polyhydroxyure-}$thane matrix represents the mass of the polyhydroxyurethane matrix before gelling, with the respective masses being expressed in grams, for example.

According to the present invention, the polyfunctional cyclic carbonate is not particularly limited, provided that it has at least three cyclic carbonate groups, and preferably, at most six cyclic carbonate groups. Herein, also a mixture of polyfunctional cyclic carbonates may be used. In addition, one or more difunctional cyclic carbonate(s) may be present as long as the dimensional stability of the polyhydroxyurethane matrix is not adversely affected. Principally, such difunctional cyclic carbonates which act as a chain extender decrease the crosslink density of the polyhydroxyurethane matrix, and thus, allow to improve the electrolyte uptake thereof.

In a preferred embodiment of the present invention, the polyfunctional cyclic carbonate is derived from a polyglycidyl ether. For example, polyglycidyl ethers can be obtained from bio-based polyols, such as sugar alcohols, by glycidylation using bio-based epichlorohydrin (Epicerol®, Solvay). In this case, the polyglycidyl ether is completely bio-based. Preferably, the polyglycidyl ether is selected from the group consisting of glycerol polyglycidyl ether, trimethylolpropane polyglycidyl ether, pentaerythritol polyglycidyl ether, and sorbitol polyglycidyl ether. The aforementioned polyglycidyl ethers can be used alone or in combination, as required.

In another embodiment of the present invention, the polyglycidyl ether is ethoxylated. Thereby, it is possible to further decrease the crosslink density of the polyhydroxyurethane matrix. As a consequence, the electrolyte uptake thereof is improved. For example, the ethoxylation of the polyglycidyl ether can be accomplished by reacting the polyol to be glycidylated with ethylene oxide or non-toxic ethylene carbonate, which are obtainable from bio-based ethylene, respectively.

Generally, the cyclic carbonate groups may be introduced into the polyglycidyl ether either by biological $CO_2$ fixation or by chemical $CO_2$ fixation using an appropriate catalyst, such as tetra-n-butylammonium bromide. In any case, $CO_2$ fixation leads here to five-membered carbonate ring systems. Upon reaction with the diamine, β-hydroxyurethane groups are formed.

The above considerations also apply to difunctional cyclic carbonates, if present, which are obtainable from respective diglycidyl ethers.

According to the present invention, the diamine is not particularly limited. It may be used alone, or a mixture of different diamines may be used. Preferably, the diamine has two primary amino groups. More preferably, the diamine is a linear α,ω-diaminoalkane. Herein, the number of carbon atoms constituting the alkylene chain of the α,ω-diaminoalkane is not particularly limited. However, it is preferable that the number of carbon atoms is in the range of from 2 to 15, more preferable from 4 to 12, and particularly preferable from 5 to 10. Optionally, the α,ω-diaminoalkane may have one or more etheric oxygen atom(s) to increase the electrolyte uptake. Examples of diamines include 4,7,10-trioxa-1,13-tridecanediamine, 1,6-diaminohexane, and 1,5-diaminopentane. The aforementioned diamines may be used alone or in combination, as required. 1,6-Diaminohexane and 1,5-diaminopentane may be of bio-based origin. 1,5-Diaminopentane is also known as cadaverine, and can be obtained by decarboxylation of the amino acid lysine. Accordingly, in connection with the aforementioned carbonated polyglycidyl ethers, it is possible to almost completely avoid the use of non-renewable resources in the manufacture of the polyhydroxyurethane matrix of the gel polymer electrolyte.

In a preferred embodiment of the gel polymer electrolyte according to the present invention, the polyhydroxyurethane matrix has a structural unit represented by the following formula (I) and/or the following formula (II):

(I)

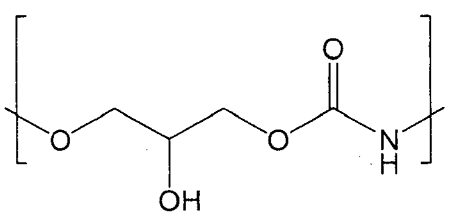

(II)

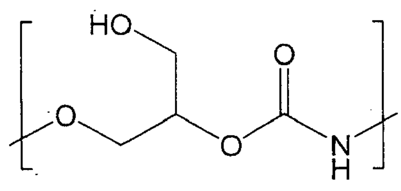

The structural units represented by the above formulae (I) and (II) are obtained by the reaction of carbonated polyglycidyl ethers with diamines having primary amino groups. As already mentioned, the cyclic carbonate groups of carbonated polyglycidyl ethers are five-membered, and thus, lead to polyhydroxyurethanes having a hydroxy group in the β-position with respect to the oxygen atom of the urethane group. Typically, a mixture of the structural isomers as shown above is formed.

In another preferred embodiment of the gel polymer electrolyte according to the present invention, the polyhydroxyurethane matrix is partially crosslinked, i.e. unreacted cyclic carbonate groups remain after the formation of the polymer matrix. Such a partial crosslinking can be achieved when using an excess of the polyfunctional cyclic carbonate. In other words, the total number of cyclic carbonate groups is then larger than the total number of amino groups. A

partially crosslinked polyhydroxyurethane matrix having a decreased crosslink density is advantageous, since the electrolyte uptake is thereby increased.

In order to obtain the gel polymer electrolyte, the polyhydroxyurethane matrix may be immersed in the electrolyte solution. Thereby, gelling can be conducted until a saturation is reached, i.e. until the electrolyte uptake has reached its final value.

According to the present invention, as the electrolyte solution, an alkali metal salt dissolved in an aprotic polar solvent is used. Preferably, the anion of the alkali metal salt is selected from the group consisting of perchlorate ($ClO_4^-$), hexafluorophosphate ($PF_6^-$), tetrafluoroborate ($BF_4^-$), chelatoborates like bis(oxalato)borate ($B(C_2O_4)_2^-$) and their fluorinated derivatives, sulfonates like trifluoromethanesulfonate ($CF_3SO_3^-$), bis(trifluoromethanesulfonyl)imide ($N(SO_2CF_3)_2^-$), and bis(fluorosulfonyl)imide ($N(SO_2F)_2^-$). Alkali metal salts containing the above inert anions exhibit a high electrical mobility in the polyhydroxyurethane matrix, thereby resulting in a high ionic conductivity.

The alkali metal of the alkali metal salt is not particularly limited, and is, for example, lithium or sodium, depending on the active material of the respective energy storage system in which the gel polymer electrolyte shall be used. From the viewpoint of cost-efficiency, it is preferable that the alkali metal of the alkali metal salt is sodium.

As far as the aprotic polar solvent for dissolving the electrolyte is concerned, the present invention is not particularly limited. Typical examples of such aprotic polar solvents are linear and cyclic carbonates, linear esters like ethyl acetate, cyclic esters, i.e. lactones, like γ-butyrolactone (GBL), linear and cyclic ethers like tetrahydrofuran, and acetonitrile. In a preferred embodiment, the aprotic polar solvent is a cyclic carbonate, e.g. ethylene carbonate or propylene carbonate, or a mixture of such cyclic carbonates. Due to the structural similarity with the cyclic carbonate groups of the polyhydroxyurethane matrix, provided that the latter is partially crosslinked, the interaction of the solvent and the polymer matrix is improved, thereby allowing for a high electrolyte uptake, and thus, for a high ionic conductivity.

According to the present invention, the concentration of the alkali metal salt dissolved in the aprotic polar solvent is not particularly limited, either. Preferably, said concentration ranges from 0.5 to 1.5 mol $L^{-1}$, and more preferably from 0.8 to 1.2 mol $L^{-1}$, e.g. 1.0 mol $L^{-1}$. In case the concentration of the alkali metal salt falls within the aforementioned ranges, the ionic conductivity reaches a particularly high value. In this context, it is clear to the skilled person that the ionic conductivity is limited to a certain maximum value. Upon further increasing the concentration of the alkali metal salt, the viscosity of the electrolyte solution increases as well, which in turn may adversely affect the electrical mobility of the ions in the polyhydroxyurethane matrix due to high friction forces.

The polymer matrix may also contain conductive fillers, such as graphene or graphene oxide. Thereby, it is possible to further increase the ionic conductivity of the gel polymer electrolyte.

Based on the specific structure of the polyhydroxyurethane matrix, it is possible to achieve a high electrolyte uptake. Preferably, the electrolyte uptake, as expressed by the above formula (a), is at least 200 mass%, i.e. the polyhydroxyurethane matrix can take up the twofold mass with respect to its own or even more.

In another aspect, the present invention relates to the use of the above-defined gel polymer electrolyte as a separation medium for an energy storage system. Examples of the energy storage system include chargeable and non-chargeable batteries, capacitors, fuel cells, and dye-sensitized solar cells, without being limited to such energy storage systems though. Since the polyhydroxyurethane matrix is particularly compatible with sodium salts and lithium salts, the gel polymer electrolyte according to the present invention may be used as a separation medium in a sodium ion battery or a lithium ion battery.

The polyhydroxyurethane matrix of the gel polymer electrolyte according to the present invention can be obtained using bio-based starting materials, without the necessity of using any fluorine-based educts. Thus, the hazard potential in the manufacture and in the handling of the gel polymer electrolyte as well as of the final energy storage system is significantly reduced. Furthermore, the gel polymer electrolyte according to the present invention has a high ionic conductivity, thereby allowing for a reduction of the internal resistance in the energy storage system. Accordingly, both the operational safety and the efficiency of such an energy storage system are improved, when using the gel polymer electrolyte according to the present invention for such purposes.

Figures:

Fig. 1 shows the correlation between the electrolyte uptake and the ionic conductivity of systems 1 a to 1e.

Fig. 2 shows the correlation between the electrolyte uptake and the ionic conductivity of systems 1 e to 6.

Fig. 3 shows a schematic setup of a sodium ion battery (SIB).

Fig. 4 shows the correlation of the specific capacity, the capacity retention, and the Coulombic efficiency vs. the

charge and discharge cycles of the reference cell SIB1.

Fig. 5 shows the correlation of the specific capacity, the capacity retention, and the Coulombic efficiency vs. the charge and discharge cycles of the GPE-based cell SIB2.

## Examples

The present invention is further illustrated by the following Examples, but is not to be construed as being limited thereto.

*Synthesis of monomers*

Bio-based polyfunctional cyclic carbonates obtained from carbohydrates were used as the monomers for the polyhydroxyurethane synthesis, and were prepared by reaction of the respective polyglycidyl ethers with carbon dioxide in a stainless steel pressure reactor, as shown below:

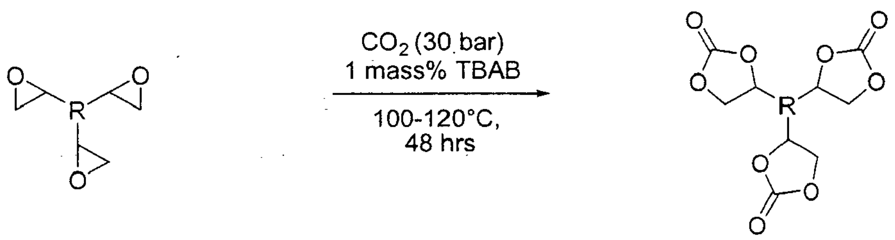


The synthesis of the polyfunctional cyclic carbonates was carried out in the absence of a solvent at 100 to 120°C. Tetra-*n*-butylammonium bromide (TBAB) was used as the catalyst at a concentration of 1 mass%. The progress of the reaction was observed using $^1$H-NMR spectroscopy.

Specifically, carbonated trimethylolpropane polyglycidyl ether (TMPGC), its ethoxylated analogue (EO-TMPGC), and sorbitol polyglycidyl ether (SGC) were prepared:

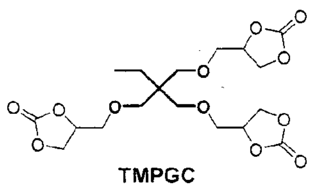

**TMPGC**

CC = 5.2

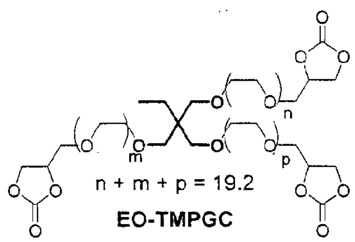

n + m + p = 19.2

**EO-TMPGC**

CC = 2.0

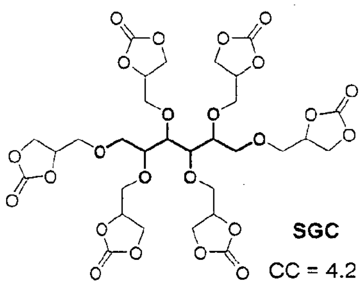

**SGC**

CC = 4.2

Since the polyglycidyl ethers used for preparing the polyfunctional cyclic carbonates were of technical purity, the amount of cyclic carbonate groups was determined subsequent to the carbonation by quantitative $^1$H-NMR measurements. For the sake of easiness, the amount of cyclic carbonate groups is here expressed in terms of the carbonate number (CC) in mmol $g^{-1}$.

TMPGC and EO-TMPGC represent derivatives of trimethylolpropane which can be obtained from starch by fermentation. SGC is composed of a sorbitol scaffold, and is obtained from $C_6$ sugars by catalytic hydration.

As the diamines, 4,7,10-trioxa-1,13-tridecanediamine (TTDA) and bio-based cadaverine (Cad) were used, as shown below:

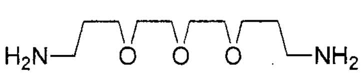

**TTDA**

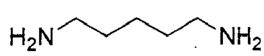

**Cad**

*Polymerization and production of polymer gel electrolyte*

The polymer compositions were cured at 80°C for 14 hrs, and then, at 100°C for 4 hrs in a metal mold, thereby obtaining a polyhydroxyurethane film made of a polyhydroxyurethane matrix having a thickness of about 300 μm. In the course of the ring-opening of the cyclic carbonate groups, both primary and secondary hydroxy groups were formed. The crosslinked polyhydroxyurethane matrix is shown below for the reaction of TMPGC with the respective diamine:

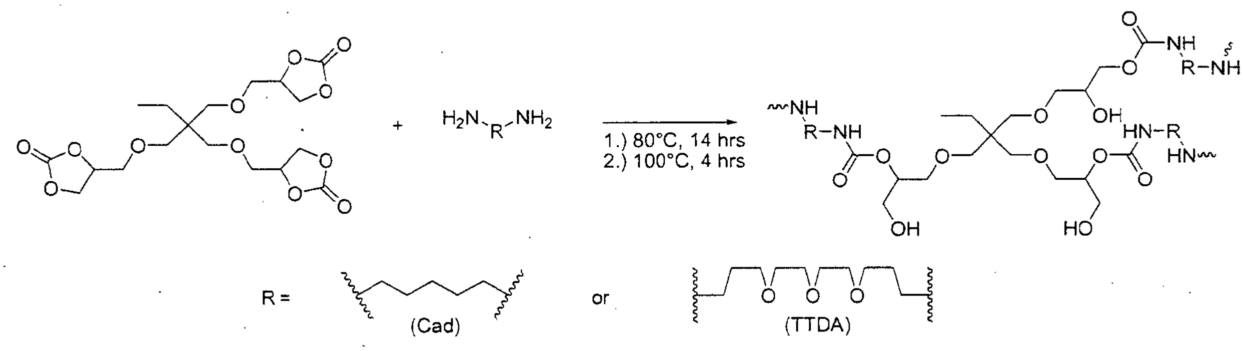


Based on the polyhydroxyurethane matrix obtained by TMPGC und TTDA as a reference system, the correlation between the crosslink density and the extent of gelling was examined by evaluating the electrolyte uptake as well as the ionic conductivity.

Starting from an equimolar reaction mixture in terms of cyclic carbonate groups and amino groups, the carbonate number (CC) of TMPGC was systematically raised to 1.20 eq. The unreacted cyclic carbonate groups in the polyhydroxyurethane matrix were expected to interact with the solvent as well as with the electrolyte dissolved therein.

Table A provides a summary of the increase of the electrolyte uptake as well as the ionic conductivity, and the decrease of the glass transition temperature as a result of a reduced crosslink density. This in turn results from the increase of cyclic carbonate groups, i.e. the increase of TMPGC [eq], as expressed in terms of the carbonate number (CC) obtained by quantitative $^1$H-NMR measurements. The glass transition temperature $T_g$ was measured by dynamical scanning calorimetry (DSC, heating rate of 20 K $min^{-1}$, 2$^{nd}$ heating curve) of the ungelled polyhydroxyurethane films. The ionic conductivity 6 of the prepared gel polymer electrolytes was measured by electrochemical impedance spectroscopy (EIS) at a temperature of 25°C, with the standard deviations being calculated from three consecutive measurements. Specifically, gelation of the polyhydroxyurethane films was carried out in a reference electrolyte solution ($NaClO_4$, dissolved in propylene carbonate, 1 M, 6.49 mS $cm^{-1}$, 25°C) within 48 hrs. The electrolyte uptake was evaluated with formula (a) as defined above from three measurements.

Table A

| system | TMPGC [eq] | $T_g$ [°C] | electrolyte uptake [mass%] | б [mS $cm^{-1}$] |
|---|---|---|---|---|
| 1a | 1.00 | 11 | 245 | 0.90 ± 0.05 |
| 1b | 1.05 | 11 | 250 | 0.94 ± 0.11 |
| 1c | 1.10 | 11 | 290 | 1.28 ± 0.08 |
| 1d | 1.15 | 9 | 330 | 1.89 ± 0.03 |
| 1e | 1.20 | 8 | 365 | 2.03 ± 0.11 |

As can be taken from Fig. 1, the correlation between the electrolyte uptake and the ionic conductivity follows a linear relationship.

While the equimolar mixture of monomers (system 1 a) yielded a polyhydroxyurethane matrix with an electrolyte uptake of 245 mass% and an ionic conductivity of 0.90 mS $cm^{-1}$, the mixture of monomers with a TMPGC excess of 1.20 eq (system 1 e) resulted in an electrolyte uptake of 365 mass% and an ionic conductivity of 2.03 mS $cm^{-1}$. An even larger TMPGC excess could not be realized, since under such stoichiometric conditions, a polyhydroxyurethane matrix with a continuous network structure could not be obtained. Therefore, for all further polymerizations, 1.20 eq of TMPGC in terms of the carbonate number (CC) were applied.

Table B provides a summary of the electrolyte uptake and the ionic conductivity of the such prepared gel

polymer electrolytes along with the glass transition temperature of the ungelled polyhydroxyurethane films. The short cuts of the polyhydroxyurethanes include the abbreviations of the respective polyfunctional cyclic carbonate and diamine. The electrolyte uptake, the ionic conductivity б, and the glass transition temperature $T_g$ were measured under the aforementioned conditions.

Table B

| system | polyhydroxyurethane [eq] 1.20 | $T_g$ [°C] | electrolyte uptake [mass%] | б [mS $cm^{-1}$] |
|---|---|---|---|---|
| 1e | TMPGC_TTDA | 8 | 360 | 2.03 ± 0.11 |
| 2 | TMPGC_Cad | 30 | 275 | 0.89 ± 0.10 |
| 3 | EO-TMPGC_TTDA | -40 | 650 | 4.00 ± 0.15 |
| 4 | EO-TMPGC_Cad | -38 | 685 | 4.50 ± 0.24 |
| 5 | SGC_TTDA | 17 | 230 | --- |
| 6 | SGC_EO-TMPGC_TTDA | -26 | 355 | 2.20 ± 0.19 |

As can be taken from Fig. 2, the correlation between the electrolyte uptake and the ionic conductivity follows a linear relationship.

Systems 1 e and 2 showed electrolyte uptakes ranging from about 250 to 350 mass%. In contrast thereto, systems 3 and 4 which were prepared based on more flexible ethoxylated TMPGC (EO-TMPGC) showed significantly higher electrolyte uptakes ranging from about 650 to 700 mass%. In line with this, high ionic conductivities of from 4.00 to 4.50 mS $cm^{-1}$ could be measured for systems 3 and 4 due to the increased amount of the electrolyte absorbed in the polyhydroxyurethane matrix. System 5 was prepared from SGC, and was mechanically too instable, i.e. brittle, to be evaluated by impedance measurements. Thus, in system 6, an equimolar mixture of SGC and EO-TMPGC was prepared, which showed a conductivity of 2.20 mS $cm^{-1}$ at an electrolyte uptake of 355 mass%.

*Comparison with gel polymer electrolytes known in the art*

In order to draw a comparison with GPE systems known in the art, the so-called GFC factor (gel vs. fluid conductivity factor) was introduced. Said factor expresses the ratio of the conductivities of the gel polymer electrolyte and the pure, i.e. fluid, electrolyte, used for preparing the GPE. In other words, the GFC factor reflects the maintenance of the conductivity of the gel polymer electrolyte with respect to the conductivity of the fluid electrolyte in terms of a dimensionless number. The GFC factor allows to effectively compare GPE systems even when based on different fluid electrolytes, and also allows to assess as to whether a specific GPE system can be used in energy storage systems.

Table C provides an overview of GPE systems known in the art as well as GPE systems based on the polyhydroxyurethane matrix according to the present invention in terms of the polymer matrix, the electrolyte, the ionic conductivity $б_{GPE}$ of the GPE system, the ionic conductivity $б_{fluid}$ of the fluid electrolyte, and the GFC factor, respectively:

Table C

| polymer matrix | electrolyte | $б_{GPE}$ [mS $cm^{-1}$] | $б_{fluid}$ [mS $cm^{-1}$] | GFC factor |
|---|---|---|---|---|
| polyhydroxyurethane (PHU) | 1 M $NaClO_4$ in PC | 4.50 ± 0.24 | 6.49 | 0.69 |
| polymethylmethacrylate (PMMA) | 1 M $NaClO_4$ in EC/PC | ~1.0[1] | 8.24[2] | 0.12 |
| poly(vinylidene difluoride hexafluoropropylene) (PVdF-HFP) | 1 M $NaClO_4$ in EC/DMC/EMC | 0.82[3] | 5.0[4] | 0.16 |

(continued)

| polymer matrix | electrolyte | б GPE [mS cm$^{-1}$] | б fluid [mS cm$^{-1}$] | GFC factor |
|---|---|---|---|---|
| polyvinylidene difluoride (PVdF) | 1 M $LiPF_6$ in EC/DMC/EMC | 4.5[5] | 11.0[6] | 0.41 |
| PC = propylene carbonate; EC = ethylene carbonate; DMC = dimethyl carbonate; EMC = ethyl methyl carbonate<br>[1] S. A. Hashmi et al., J. Phys. D: Appl. Phys. 2007, 40, 6527-6534.<br>[2] A. Ponrouch et al., Energy Environ. Sci. 2012, 5, 8572-8583.<br>[3] Y. Zhu et al., Electrochim. Acta 2017, 224, 405-411.<br>[4] Q. Li et al., Green Energy & Environment 2016, 1, 18-42.<br>[5] M. K. Song et al., J. Power Sources 2004, 125, 10-16.<br>[6] W. K. Behl et al., Army Research Laboratory 1998, Adelphi, MD 20783-1197. | | | | |

As can be taken from Table C, the gel polymer electrolyte according to the present invention has a significantly higher GFC factor than the GPE systems known in the art.

*Battery test*

Furthermore, the cycle stability of a sodium ion battery (SIB) using the gel polymer electrolyte according to the present invention as a separation medium was evaluated. For drawing a comparison, a separation medium based on glass fiber mat was used.

The setup of the sodium ion battery was in accordance with the setup of a button cell of the type CR2025 using a cathode with the active material $Na_{0.67}Ni_{0.33}Mn_{0.67}O_2$, and hard carbon as the anode. Aluminium foil was used as the current collector. As mentioned above, the reference cell SIB1 included a separator made of glass fiber mat. In the GPE-based cell SIB2, the above GPE system 4 based on a polyhydroxyurethane matrix (EO-TMPGC_Cad) was used. 1 M $NaClO_4$ in propylene carbonate was used as the electrolyte solution. The schematic setup of the sodium ion battery is shown in Fig. 3.

The performance of both the reference cell SIB1 and the GPE-based cell SIB2 was examined at room temperature by running a plurality of charging and discharging cycles. In detail, the energy density, the energy efficiency, the Coulombic efficiency, and the specific capacity were determined. The specific capacity is related to the mass of the active material of the cathode.

Fig. 4 and Fig. 5 show the specific capacity, the capacity retention, and the Coulombic efficiency of the reference cell SIB1 having the separator made of glass fiber mat, and the GPE-based cell SIB2 according to the present invention, respectively.

After the formation process, both battery cells were charged to 4.0 V or 3.8 V with a charge-rate (C-rate) of 0.67, and discharged to 1.5 V vs. sodium. During cycles 10 to 23, SIB1 showed a continuous slight decrease of the specific capacity from 86 to 78 mAh $g^{-1}$ at a constant C-rate of 0.67. Then, the specific capacity significantly decreased to about 53 mAh $g^{-1}$. Obviously, the reference cell SIB1 was subject to a structural degradation at the positive electrode, and/or to an electrochemical decomposition. The GPE-based cell SIB2 provided an almost constant specific capacity of about 75 mAh $g^{-1}$, and a Coulombic efficiency of more than 99.5%. The utilizable specific capacity did not decrease within consecutive cycles. During cycles 96 to 115, an extreme stress test was conducted in the GPE-based cell SIB2, wherein the charging voltage was raised to 4.8 V, while the C-rate was raised to 20, thereby temporarily resulting in a specific capacity of about 145 mAh $g^{-1}$. Subsequently, in cycles 116 to 150, the charging voltage was reduced back to 3.8 V at a C-rate of 1. Despite of such an extreme stress test, the following cycles ran stably and uniformly.

The internal resistance of the GPE-based cell SIB2, with the internal resistance being composed of the reaction resistance and the electrical resistance, was about 25% less compared to the internal resistance of the reference cell SIB1. This was in line with the above-described high ionic conductivities of the gel polymer electrolytes according to the present invention, as measured by electrochemical impedance spectroscopy.

## Claims

**1.** A gel polymer electrolyte, comprising:

a polyhydroxyurethane matrix, obtained by crosslinking a polyfunctional cyclic carbonate with a diamine, and an alkali metal salt dissolved in an aprotic polar solvent,
wherein the polyhydroxyurethane matrix is gelled with the aprotic polar solvent and the alkali metal salt dissolved therein.

**2.** The gel polymer electrolyte according to claim 1, wherein the polyfunctional cyclic carbonate is derived from a polyglycidyl ether.

**3.** The gel polymer electrolyte according to claim 2, wherein the polyglycidyl ether is selected from the group consisting of glycerol polyglycidyl ether, trimethylolpropane polyglycidyl ether, pentaerythritol polyglycidyl ether, and sorbitol polyglycidyl ether.

**4.** The gel polymer electrolyte according to claim 2 or 3, wherein the polyglycidyl ether is ethoxylated.

**5.** The gel polymer electrolyte according to any one of claims 1 to 4, wherein the diamine is a linear α,ω-diaminoalkane having optionally one or more etheric oxygen atom(s).

**6.** The gel polymer electrolyte according to any one of claims 1 to 5, wherein the polyhydroxyurethane matrix has a structural unit represented by the following formula (I) and/or the following formula (II):

(I) 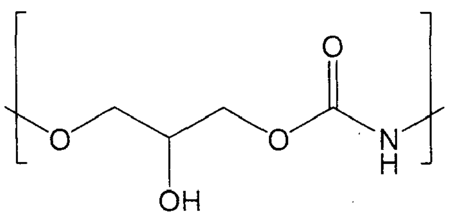

(II) 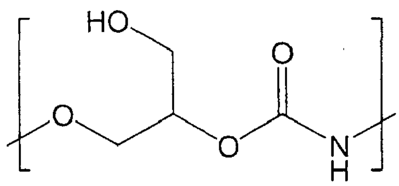

**7.** The gel polymer electrolyte according to any one of claims 1 to 6, wherein the polyhydroxyurethane matrix is partially crosslinked.

**8.** The gel polymer electrolyte according to any one of claims 1 to 7, wherein the anion of the alkali metal salt is selected from the group consisting of perchlorate, hexafluorophosphate, and tetrafluoroborate.

**9.** The gel polymer electrolyte according to any one of claims 1 to 8, wherein the alkali metal of the alkali metal salt is sodium or lithium.

**10.** The gel polymer electrolyte according to any one of claims 1 to 9, wherein the aprotic polar solvent is a cyclic carbonate or a mixture of cyclic carbonates.

**11.** The gel polymer electrolyte according to any one of claims 1 to 10, wherein the concentration of the alkali metal salt dissolved in the aprotic polar solvent is in the range of from 0.5 to 1.5 mol $L^{-1}$.

**12.** The gel polymer electrolyte according to any one of claims 1 to 11, wherein the electrolyte uptake, expressed by the following formula (a), is at least 200 mass%:

$$\text{(a)}\quad \text{electrolyte uptake} = \frac{m_{\text{gel polymer electrolyte}} - m_{\text{polyhydroxyurethane matrix}}}{m_{\text{polyhydroxyurethane matrix}}} \times 100\ \text{mass\%},$$

wherein $m_{\text{gel polymer electrolyte}}$ represents the mass of the gel polymer electrolyte, and $m_{\text{polyhydroxyurethane}}$ matrix represents the mass of the polyhydroxyurethane matrix.

**13.** Use of the gel polymer electrolyte according to any one of claims 1 to 12 as a separation medium for an energy storage system.

**14.** Use according to claim 13, wherein the energy storage system is a sodium ion battery or a lithium ion battery.

Fig. 1

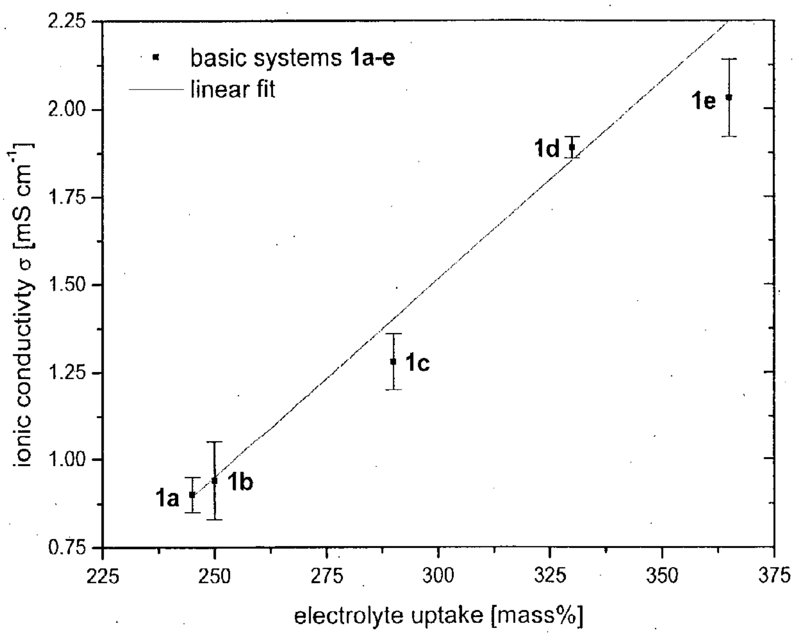
basic systems 1a-e
linear fit
ionic conductivty σ [mS cm-1]
electrolyte uptake [mass%]
2.25
2.00
1.75
1.50
1.25
1.00
0.75
225
250
275
300
325
350
375
1a
1b
1c
1d
1e

Fig. 2

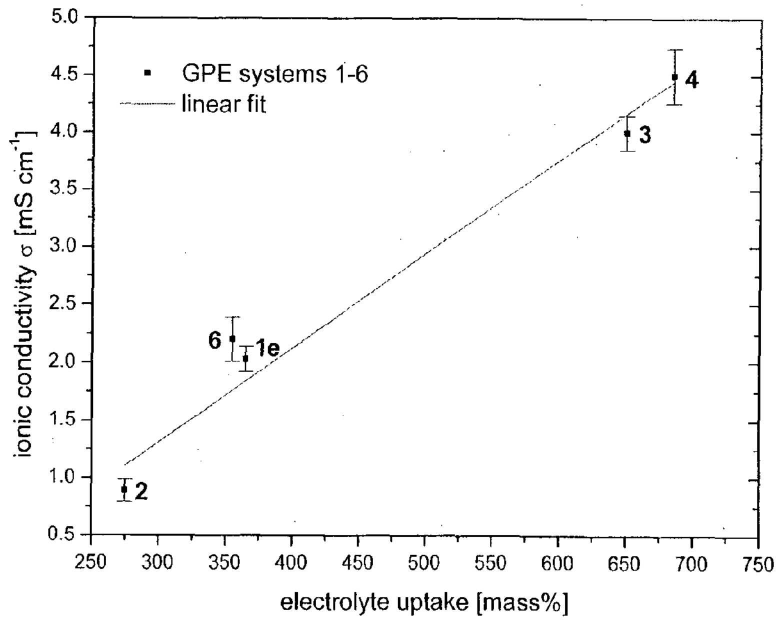
GPE systems 1-6
linear fit
ionic conductivity σ [mS cm-1]
electrolyte uptake [mass%]
5.0
4.5
4.0
3.5
3.0
2.5
2.0
1.5
1.0
0.5
250
300
350
400
450
500
550
600
650
700
750
4
3
6
1e
2

Fig. 3

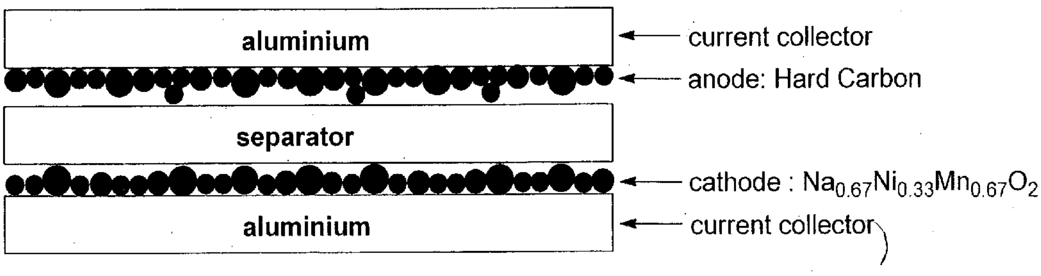


**SIB 1: separator = glass fiber mat**
**SIB 2: separator = GPE**

Fig. 4

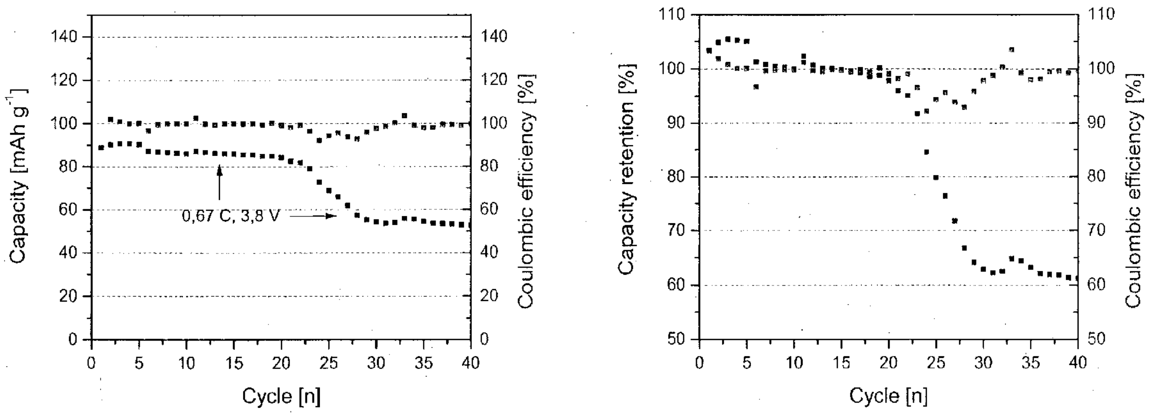
Capacity [mAh g-1]
Coulombic efficiency [%]
0,67 C, 3,8 V
Cycle [n]
Capacity retention [%]
Coulombic efficiency [%]
Cycle [n]

Fig. 5

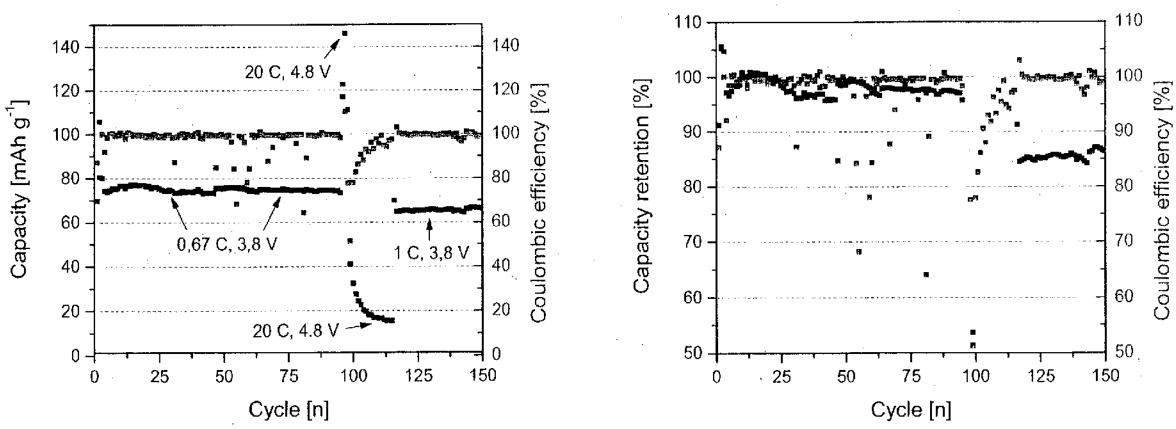

140
120
100
80
60
40
20
0
Capacity [mAh g-1]
20 C, 4.8 V
0,67 C, 3,8 V
1 C, 3,8 V
20 C, 4.8 V
0
25
50
75
100
125
150
Cycle [n]
Coulombic efficiency [%]
110
100
90
80
70
60
50
Capacity retention [%]
Cycle [n]

Europäisches Patentamt
European Patent Office
Office européen des brevets

# EUROPEAN SEARCH REPORT

Application Number
EP 17 00 1373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2016/181626 A1 (MADABUSI VENKATRAMANAN K [US] ET AL) 23 June 2016 (2016-06-23)<br>* paragraphs [0091] - [0101] * | 1-5,7-13<br>6 | INV.<br>H01M10/0565 |
| X<br>A | WO 2014/072789 A2 (JOHNSON CONTROLS TECH CO [US]; UNIV BEIJING SCIENCE & TECH [CN]) 15 May 2014 (2014-05-15)<br>* page 4, paragraphs 41, 51 * | 1-5,7-14<br>6 | |
| A | JP 2007 297544 A (DAI ICHI KOGYO SEIYAKU CO LTD; JAPAN PAINT MANUFACTURERS ASS) 15 November 2007 (2007-11-15)<br>* paragraphs [0055] - [0057] * | 1-14 | |

TECHNICAL FIELDS SEARCHED (IPC)

H01M

The present search report has been drawn up for all claims

1

| Place of search | Date of completion of the search | Examiner |
|---|---|---|
| The Hague | 6 November 2017 | Hofer, Astrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 00 1373

This annex lists the patent family members relating to the patent documents cited in the above-mentioned European search report. The members are as contained in the European Patent Office EDP file on
The European Patent Office is in no way liable for these particulars which are merely given for the purpose of information.

06-11-2017

| Patent document cited in search report | Publication date | Patent family member(s) | Publication date |
|---|---|---|---|
| US 2016181626 A1 | 23-06-2016 | NONE | |
| WO 2014072789 A2 | 15-05-2014 | CN 103804892 A<br>WO 2014072789 A2 | 21-05-2014<br>15-05-2014 |
| JP 2007297544 A | 15-11-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **K. S. NGAI et al.** *Ionics,* 2016, vol. 22, 1259-1279
- **S. A. HASHMI et al.** *J. Phys. D: Appl. Phys.,* 2007, vol. 40, 6527-6534
- **A. PONROUCH et al.** *Energy Environ. Sci.,* 2012, vol. 5, 8572-8583
- **Y. ZHU et al.** *Electrochim. Acta,* 2017, vol. 224, 405-411
- **Q. LI et al.** *Green Energy & Environment,* 2016, vol. 1, 18-42
- **M. K. SONG et al.** *J. Power Sources,* 2004, vol. 125, 10-16
- **W. K. BEHL et al.** Army Research Laboratory. 1998